# FASCICULE DE BREVET EUROPEEN

(11) **EP 0 806 581 B1**
(45) Date de publication et mention de la délivrance du brevet: **18.07.2001**
(21) Numéro de dépôt: 97400916.9
(22) Date de dépôt: 23.04.1997
(51) Int. Cl.: F16D 23/14

(54) **Dispositif de butée d'embrayage à rondelle élastique**
Kupplungsausrücklager mit einem elastischen Ring
Clutch release bearing with an resilient ring

(30) Priorité: 09.05.1996 FR 9605799
(43) Date de publication de la demande: 12.11.1997
(73) Titulaire: SKF FRANCE, F-92140 Clamart (FR)
(72) Inventeur: Ponson, Frédéric, 37230 Luynes (FR); Collignon, Bertrand, 37540 Saint-Cyr-sur-Loire (FR); Arnault, Benoît, 37000 Tours (FR); Brulard, Cédric, 37000 Tours (FR)
(74) Mandataire: Casalonga, Axel

(56) Documents cités:
- EP-A- 0 276 613
- DE-A- 4 327 879
- DE-A- 19 503 218
- FR-A- 2 533 279
- FR-A- 2 533 281
- FR-A- 2 559 861
- FR-A- 2 577 291
- US-A- 4 815 867

## Description

La présente invention concerne le domaine des butées d'embrayage, et plus particulièrement les butées du type comportant un dispositif d'auto-alignement à friction constitué d'une rondelle venant presser axialement la bague fixe du roulement formant butée contre une surface radiale d'un organe de manoeuvre par rapport auquel le roulement a un certain degré de liberté de déplacement radial.

On connaît, par la demande de brevet européen n° 0247400 (INA), un dispositif de butée d'embrayage qui comporte un organe de manoeuvre pourvu d'une portion cylindrique et d'une portion radiale, un roulement de butée dont la bague extérieure fixe est pourvue d'une portion radiale d'extrémité en contact avec la portion radiale de l'organe de manoeuvre, et une rondelle élastique en contact avec la portion radiale d'extrémité de la bague extérieure et avec un redan de l'organe de manoeuvre. La bague extérieure du roulement est ainsi mise en appui par la rondelle élastique contre la portion radiale de l'organe de manoeuvre, lequel est réalisé en matériau synthétique. La rondelle peut êre équipée de languettes conférant à celle-ci l'élasticité requise.

Dans un tel dispositif, on constate, après un certain temps de fonctionnement, en particulier dans les applications fonctionnant à haute température, un matage et une modification des caractéristiques géométriques initiales de la matière synthétique dans la zone du redan servant à l'ancrage de la rondelle sur l'organe de manoeuvre supportant le roulement de butée. Il peut en résulter des variations dans l'effort de précontrainte exercé par la rondelle sur le roulement avec des conséquences néfastes sur le bon fonctionnement de la butée d'embrayage.

Lorsque la bague extérieure est tournante et comporte une face d'appui sur le diaphragme avec un retour radial important vers l'axe de rotation, le processus d'assemblage et de contrôle de la butée est compliqué par le fait que l'organe de manoeuvre doit être solidarisé dès le départ avec la bague non tournante du roulement. De plus, le fait d'être obligé de monter la bague extérieure en dernier implique de monter un joint d'étanchéité serti par l'avant de la butée après la mise en place de la bague extérieure. L'espace résiduel entre le roulement et la face d'appui de l'organe de manoeuvre contre laquelle porte axialement le roulement, est souvent trop exigu pour pouvoir envisager de façon simple et automatisable de pousser sur le joint pour le faire pénétrer sur sa portée de montage.

On connaît également, par le brevet américain n° 4 561 788 (NSK), un dispositif de butée d'embrayage dont l'organe de manoeuvre est réalisé en deux parties. La partie radiale est réalisée en tôle sur laquelle est surmoulée la partie cylindrique en matériau synthétique. Une portion d'extrémité radiale de la bague fixe du roulement est mise en appui contre la partie radiale en tôle au moyen d'une rondelle, en contact avec un rebord disposé en retour de la partie en tôle. De tels dispositifs présentent les mêmes inconvénients que précédemment, à savoir que dans le cas de butées comportant des bagues en tôle emboutie, il est nécessaire de constituer dès le début du processus d'assemblage un sous-ensemble incluant l'organe de manoeuvre, la bague non tournante du roulement et la rondelle élastique.

On connaît, par le document DE A 43 27 879, une douille coulissante pour un roulement de butée d'embrayage, ladite douille coulissante étant pourvue d'un insert en tôle qui comporte une face radiale pour contact avec le roulement de butée et une zone d'appui pour une rondelle élastique. La douille coulissante est surmoulée sur l'insert en tôle.

La présente invention a pour objet de remédier aux inconvénients des dispositifs décrits ci-dessus en proposant un dispositif de butée d'embrayage de fabrication simple, présentant une bonne tenue à l'usure et au vieillissement, même à haute température et évitant d'avoir à solidariser, dès le début du processus d'assemblage, la bague non tournante avec l'organe de manoeuvre.

Le sous-ensemble de butée d'embrayage, selon l'invention, comprend un roulement de butée présentant une bague tournante, une bague non tournante munie d'une portion radiale et des éléments roulants intercalés. Le sous-ensemble comprend une coupelle en tôle métallique comprenant une partie radiale montée sur la portion radiale de la bague non tournante et une partie cylindrique se raccordant à la partie radiale à l'une de ses extrémités et se prolongeant à l'autre extrémité par un rebord radial, la coupelle étant distincte d'un organe de manoeuvre avec lequel elle est apte à coopérer, et une rondelle élastique axialement et équipée sur sa périphérie interne de languettes élastiques pouvant fléchir pour le montage de ladite rondelle sur la coupelle, ladite rondelle étant capable de mettre la portion radiale de la bague non tournante en appui axial contre la partie radiale de la coupelle, et ladite rondelle élastique étant axialement retenue par le rebord radial de la coupelle. On obtient ainsi un sous-ensemble de manipulation facile pouvant être monté sur différents types d'organes de manoeuvre.

Avantageusement, la coupelle comprend des moyens de fixation sur un organe de manoeuvre de la butée d'embrayage.

Dans un mode de réalisation de l'invention, le sous-ensemble est monté sur un organe de manoeuvre. La coupelle est solidaire de l'organe de manoeuvre, la partie radiale de la coupelle étant disposée entre l'organe de manoeuvre et la bague non tournante. Lors d'un mouvement d'auto-alignement radial, la bague non tournante frotte, d'une part, sur la partie radiale de la coupelle et, d'autre part, sur la rondelle, laquelle est en appui sur le rebord radial de la coupelle, ce qui garantit une usure faible et une excellente tenue au vieillissement de la butée d'embrayage.

Dans un mode de réalisation de l'invention, la partie cylindrique de la coupelle est montée sur une extrémité cylindrique de l'organe de manoeuvre. De préférence, l'extrémité cylindrique de l'organe de manoeuvre comprend des moyens de retenue de la coupelle. L'extrémité cylindrique de l'organe de manoeuvre peut être découpée en languettes radialement élastiques et faisant saillie vers l'extérieur en coopérant avec le rebord de la coupelle. L'extrémité cylindrique de l'organe de manoeuvre peut aussi comprendre des protubérances radiales coopérant avec des creux ou des fenêtres correspondants de la partie cylindrique de la coupelle.

Dans un mode de réalisation de l'invention, la coupelle comprend une partie cylindrique supplémentaire s'étendant à partir de la partie radiale à l'opposé du roulement et munie de moyens de retenue de la coupelle sur l'organe de manoeuvre. La partie cylindrique supplémentaire de la coupelle peut comprendre des languettes élastiques coopérant avec un épaulement de l'organe de manoeuvre ou des languettes rabattues dans des encoches de l'organe de manoeuvre.

Avantageusement, la bague tournante supporte un organe d'étanchéité emmanché sur une portée cylindrique.

Le procédé d'assemblage d'un dispositif de butée d'embrayage, selon l'invention, comprend les étapes suivantes : on met en contact une bague non tournante de roulement comprenant une portion radiale et une coupelle en tôle métallique comprenant une partie radiale, une partie cylindrique dont une extrémité se raccorde à l'extrémité de petit diamètre de la partie radiale et dont l'autre extrémité se prolonge par un rebord radial, on solidarise axialement la bague non tournante et la coupelle, au moyen d'une rondelle axialement élastique qui, d'un côté, est en contact avec le rebord radial de la coupelle et, de l'autre côté, met la portion radiale de la bague non tournante en appui contre la partie radiale de la coupelle, et on emmanche la coupelle sur une partie cylindrique d'un organe de manoeuvre.

Dans un mode de réalisation de l'invention, la bague non tournante supporte une rangée d'éléments roulants maintenus par une cage et on assemble une bague tournante et la bague non tournante pour former un roulement de butée, un organe d'étanchéité étant emmanché sur une portée cylindrique de la bague tournante de façon à solidariser les bagues tournante et non tournante, avant l'étape d'emmanchement de la coupelle sur l'organe de manoeuvre.

L'organe de manoeuvre supportant la butée peut être commandé mécaniquement au moyen d'une fourchette de commande agissant sur des surfaces d'appui prévues à cet effet. Il peut également être commandé hydrauliquement et, dans ce cas, la butée peut être fixée directement sur l'extrémité du piston ou sur une pièce située dans le prolongement axial de ce dernier. La rondelle élastique d'auto-alignement réalisant la liaison entre le roulement de butée et la coupelle intermédiaire, a une forme générale conique ou biconique. La coupelle intermédiaire est réalisée de préférence en tôle et son utilisation présente plusieurs avantages. La distance axiale entre le rebord et la partie radiale qui forme une collerette d'appui est bien maîtrisée. Ainsi, la pression axiale exercée par la rondelle élastique sur la bague non tournante du roulement est connue et parfaitement constante, ce qui garantit un bon fonctionnement de la butée. On supprime tout contact direct entre le roulement et l'organe de manoeuvre qui est réalisé en matériau synthétique, ce qui réduit l'usure par frottement entre ces deux éléments. On élimine les contacts directs entre la rondelle élastique et l'organe de manoeuvre, ce qui évite le matage et les déformations de la matière plastique qui le constitue par l'action de la rondelle. On simplifie également l'assemblage, en particulier dans le cas d'une bague extérieure tournante avec une importante portion radiale en retour vers l'axe de rotation du roulement. On n'est en effet plus obligé de constituer dès le début de l'assemblage un sous-ensemble composé de la bague intérieure non tournante, de la rondelle élastique et de l'organe de manoeuvre, ce qui facilite les manipulations ainsi que les opérations d'assemblage et des contrôles ultérieurs, le montage de la butée sur l'organe de manoeuvre se faisant en dernier grâce à la coupelle intermédiaire.

La présente invention sera mieux comprise à l'étude de la description détaillée de quelques modes de réalisation pris à titre nullement limitatif et illustrés par les dessins annexés, sur lesquels :
la figure 1 est une vue en coupe diamétrale d'un dispositif de butée d'embrayage selon l'invention;
les figures 2 à 4 sont des demi-coupes illustrant le montage d'une butée d'embrayage selon l'invention;
la figure 5 est une vue partielle de face de la rondelle élastique;
la figure 6 est une demi-coupe d'une butée d'embrayage selon un autre mode de réalisation de l'invention; et
les figures 7 à 9 présentent des variantes de la butée d'embrayage de la figure 5.

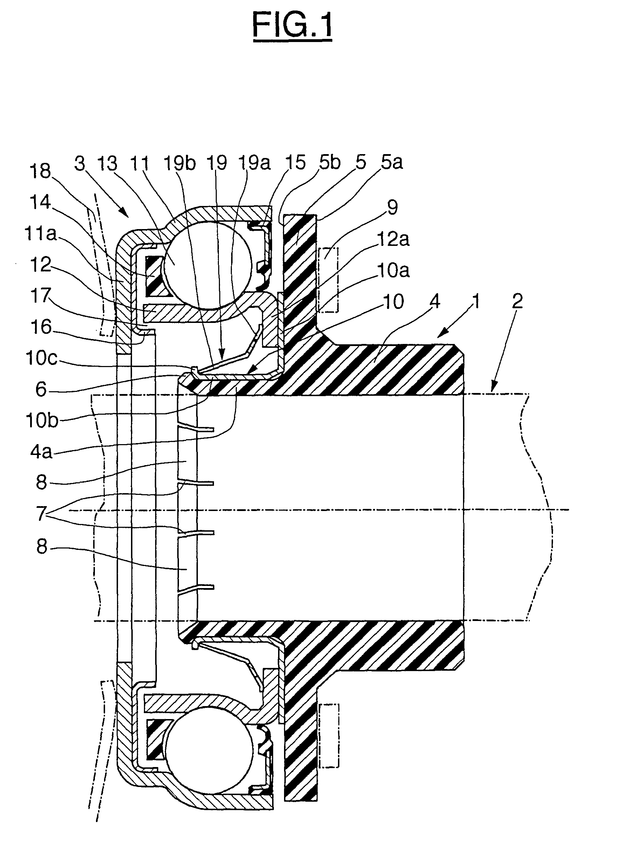

Comme on peut le voir sur la figure 1, le dispositif de butée d'embrayage comprend un organe de manoeuvre 1 coulissant axialement sur un tube-guide 2 et en contact axial avec un roulement de butée 3. L'organe de manoeuvre 1 est réalisé en matériau synthétique et comprend une partie tubulaire 4 en contact avec le tube-guide 2, et une partie radiale 5 s'étendant vers l'extérieur. La partie tubulaire 4 de l'organe de manoeuvre 1 se prolonge au-delà de la partie radiale 5 par une extrémité 4a de moindre épaisseur que la partie tubulaire 4. La partie d'extrémité 4a se prolonge radialement vers l'extérieur par un bourrelet circulaire 6. La partie d'extrémité 4a est découpée par une pluralité de rainures radiales 7 de façon à former des dents 8. La partie radiale 5 de l'organe de manoeuvre 1 est en contact sur sa surface radiale Sa avec un organe de commande 9, par exemple une fourchette, capable de provoquer le déplacement axial de l'organe de manoeuvre 1 le long du tube-guide 2.

Une coupelle 10, réalisée en tôle métallique, est montée sur la partie d'extrémité 4a de l'organe de manoeuvre 1. La coupelle 10 comprend une partie radiale 10a en contact avec la surface radiale 5b opposée à la surface radiale 5a de la partie radiale 5, une partie cylindrique 10b montée concentriquement à la partie d'extrémité 4a de l'organe de manoeuvre 1 et se raccordant à l'une de ses extrémités à l'extrémité de petit diamètre de la partie radiale 10a de la coupelle 10. A l'autre extrémité, la partie cylindrique 10b se prolonge par un rebord radial 10c. Le rebord radial 10c est de faible dimension, dans tous les cas, largement inférieur à celle de la partie radiale 10a. Le rebord radial 10c est en contact avec le bourrelet annulaire 6 de l'organe de manoeuvre 1 qui empêche la coupelle 10 de se séparer de l'organe de manoeuvre 1.

Le roulement de butée 3 comprend une bague extérieure tournante 11, une bague intérieure fixe 12, une rangée d'éléments roulants 13 disposés entre lesdites bagues extérieure 11 et intérieure 12 et maintenus par une cage 14. L'étanchéité du roulement 3 est obtenue, d'un côté, grâce à un joint d'étanchéité 15 emmanché sur une portée cylindrique de la bague extérieure 11 et, de l'autre côté, grâce à un flasque d'étanchéité 16 emmanché sur une portée cylindrique de la bague extérieure 11 et venant former un passage étroit 17 avec la bague intérieure 12. La bague extérieure 11 comprend une portion d'extrémité radiale 11a dirigée vers l'intérieur et destinée à venir en contact avec un diaphragme 18. La bague intérieure 12 comprend une portion d'extrémité radiale 12a qui est en contact avec la partie radiale 10a de la coupelle 10. La bague intérieure 12 est mise en appui axial contre la partie radiale 10a de la coupelle 10 par une rondelle élastique 19. La rondelle élastique 19 est bi-conique et comprend un premier tronc de cône 19a qui vient en appui contre la portion radiale 12a de la bague intérieure 12, et un deuxième tronc de cône 19b découpé en languettes et prenant appui sur le rebord radial 10c de la coupelle 10.

En fonctionnement, le roulement de butée 3 dispose d'un certain jeu radial par rapport à l'organe de manoeuvre 1 et à la coupelle 10. Lors d'un déplacement radial du roulement 3, la portion radiale 12a de la bague intérieure 12 frotte, d'un côté, contre la rondelle élastique 19 et, de l'autre côté, contre la portion radiale 10a de la coupelle 10. Ce frottement n'entraîne qu'une usure très faible dans la mesure où les éléments précités sont métalliques.

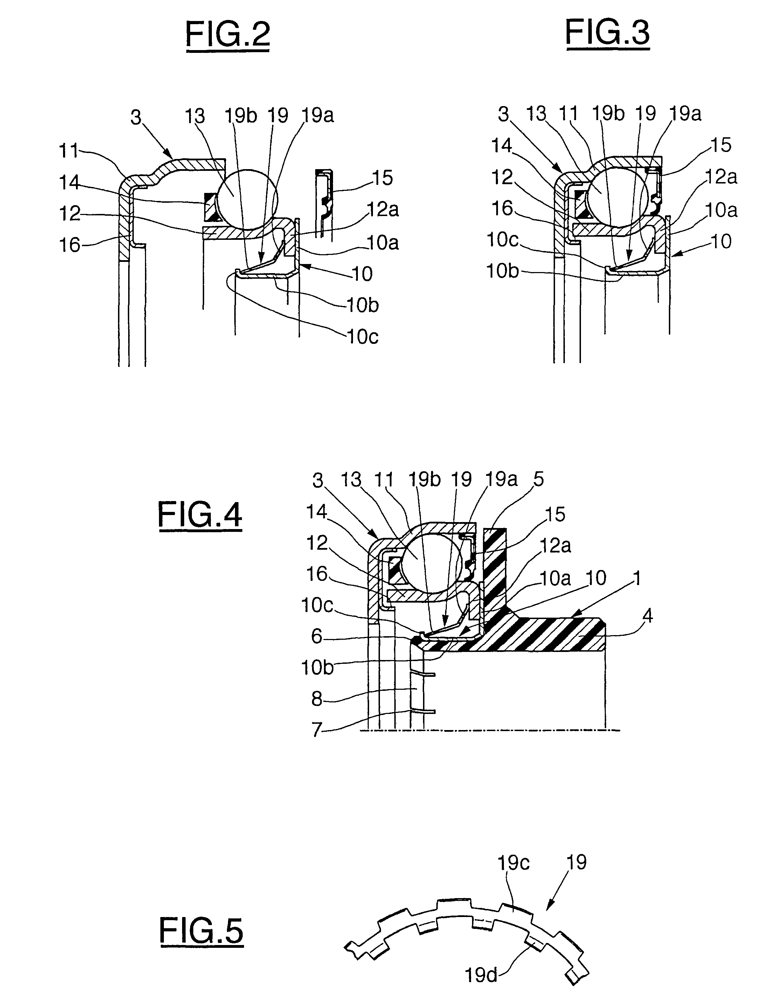

Comme on le voit sur les figures 2 à 4, la butée d'embrayage conforme à l'invention peut être assemblée de la façon suivante. On amène la bague intérieure 12 en contact avec la coupelle 10 et on les solidarise au moyen de la rondelle élastique 19 que l'on force à franchir le rebord radial 10c de la coupelle 10 en vue de sa retenue axiale et de la mise en appui de la bague intérieure 12 contre la partie radiale 10a de la coupelle 10.

Puis, on dispose sur la bague intérieure 12 une rangée d'éléments roulants 13 maintenus par leur cage 14, et la bague extérieure 11 déjà équipée de l'organe d'étanchéité 16. On emmanche alors le joint d'étanchéité 15 sur une portée cylindrique de la bague extérieure 11. On dispose alors d'un sous-ensemble comprenant le roulement 3 équipé d'une coupelle 10 et d'une rondelle élastique 19 qui peut être manipulé sans précaution particulière et présente un encombrement réduit.

On approche alors le roulement 3 de l'organe de manoeuvre 1 par un mouvement axial d'emmanchement de la coupelle 10 sur la partie d'extrémité 4a de la partie tubulaire 4 de l'organe de manoeuvre 1. Lors de l'emmanchement, la souplesse radiale des dents 8 permet l'effacement du bourrelet annulaire 6 et le passage de la coupelle 10 jusqu'à ce que les dents 8 reprennent leur position initiale, le bourrelet annulaire 6 empêchant alors tout mouvement axial de la coupelle 10. Dans un tel procédé de montage, l'emmanchement du joint d'étanchéité 15 est extrêmement aisé.

La rondelle 19, illustrée sur la figure 5, comprend des languettes 19c destinées à entrer en contact avec la bague intérieure 12 (figure 4) et des languettes 19d destinées à entrer en contact avec le rebord radial 10c de la coupelle 10 (figure 4). On obtient ainsi une rondelle 19 axialement élastique et dont les languettes 19d peuvent fléchir pour franchir le rebord radial 10c de la coupelle 10 lors de l'assemblage de la bague intérieure 12 avec ladite coupelle 10.

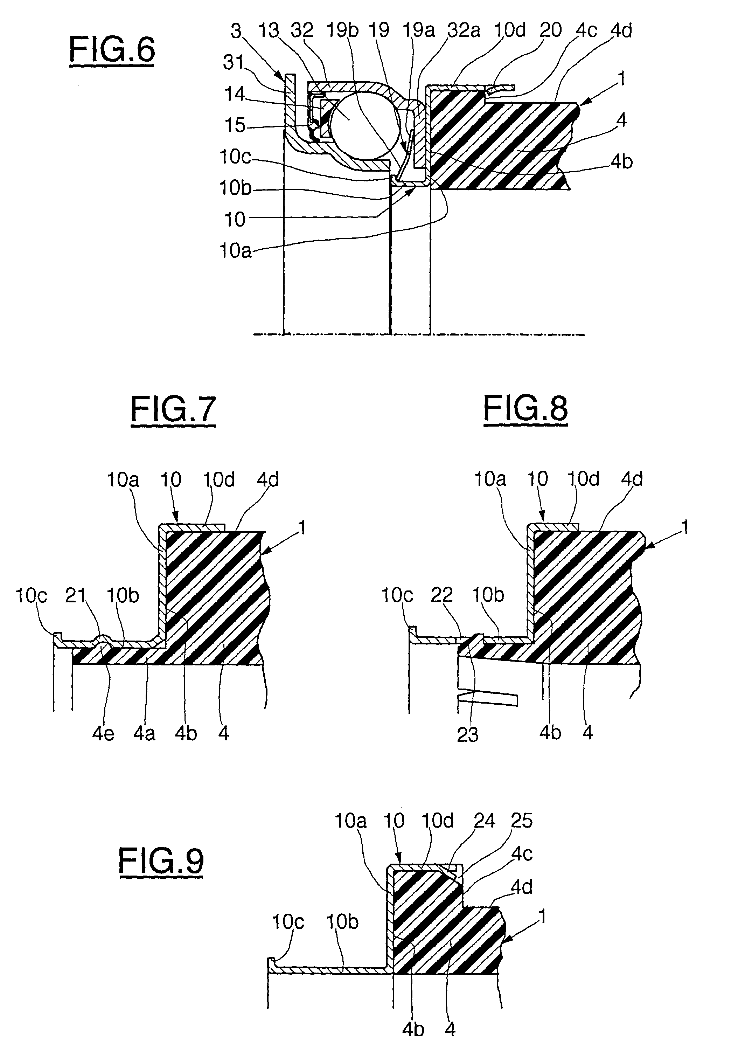

Sur la figure 6, l'organe de manoeuvre 1 est du type destiné à une butée d'embrayage à commande hydraulique. Seule une portion tubulaire 4 de l'organe de manoeuvre 1 qui sert de piston est représentée. La portion tubulaire 4 comprend une surface radiale d'extrémité 4b et un épaulement 4c formé sur sa surface cylindrique extérieure 4d. La coupelle 10 est identique à celle des figures précédentes, à ceci près qu'elle comprend, en plus, une deuxième partie cylindrique 10d qui se raccorde à la partie radiale 10a à son extrémité opposée à la première partie cylindrique 10b. Le roulement 3 comprend une bague intérieure tournante 31, une bague extérieure non tournante 32, une rangée d'éléments roulants 13 maintenus par une cage 14 et un joint d'étanchéité 15 emmanché sur une portée cylindrique de la bague extérieure non tournante 32. La bague extérieure non tournante 32 se prolonge radialement vers l'intérieur par une portion radiale 32a qui est mise en appui contre la partie radiale 10a de la coupelle 10 au moyen d'une rondelle 19. La coupelle 10 est fixée sur l'organe de manoeuvre 1 au moyen de languettes élastiques 20 prévues dans la deuxième partie cylindrique 10d et qui viennent s'encliqueter contre l'épaulement 4c de la partie tubulaire 4 de l'organe de manoeuvre 1.

Le mode de réalisation illustré sur la figure 7 est identique à celui illustré sur la figure 9, à ceci près que la deuxième partie cylindrique 10d de la coupelle est dépourvue de languettes et que la première partie cylindrique 10b est pourvue de creux 21 sur son alésage. La partie tubulaire 4 de l'organe de manoeuvre 1 comprend une portion d'extrémité 4a en contact avec la première portion cylindrique 10b de la coupelle 10 et pourvue de protubérances 4e de formes adaptées aux creux 21. La coupelle 10 est retenue axialement en contact avec l'organe de manoeuvre 1 par la coopération des protubérances 4d avec les creux 21.

Sur la figure 8, à l'emplacement des creux 21 de la figure 7, la coupelle 10 est pourvue de fenêtres 22 dans lesquelles font saillie des languettes élastiques 23 de la portion d'extrémité 4a de la partie tubulaire 4 de l'organe de manoeuvre 1.

Le mode de réalisation illustré sur la figure 9 est identique à celui de la figure 6, à ceci près que la deuxième partie cylindrique 10d de la coupelle 10 comprend à son extrémité libre des languettes 24 qui sont repliées radialement vers l'intérieur dans des encoches 25 de la partie tubulaire 4 de l'organe de manoeuvre 1.

Grâce à l'invention, on obtient un dispositif de butée d'embrayage qui peut être manipulé aisément en sous-ensemble, dont l'assemblage est extrêmement simple et qui présente une résistance à l'usure et au vieillissement améliorée.

## Revendications

1. Sous-ensemble de butée d'embrayage, comprenant un roulement (3) de butée présentant une bague tournante (11), une bague non tournante (12) munie d'une portion radiale (12a), et des éléments roulants (13) intercalés, *le sous-ensemble comprenant, en outre,* une coupelle (10) en tôle métallique comprenant une partie radiale (10a) *montée sur* la portion radiale (12a) de la bague non tournante et une partie cylindrique (10b) se raccordant à la partie radiale à l'une de ses extrémités et se prolongeant à l'autre extrémité par un rebord radial (10c), *la coupelle étant distincte d'un organe de manoeuvre avec lequel elle est apte à coopérer,* et une rondelle (19) axialement élastique et équipée sur sa périphérie interne de languettes élastiques (19c) pouvant fléchir pour le montage de ladite rondelle sur la coupelle, ladite rondelle étant capable de mettre la portion radiale de la bague non tournante en appui axial contre la partie radiale de la coupelle et ladite rondelle élastique étant axialement retenue par le rebord radial de la coupelle.

2. Sous-ensemble selon la revendication 1, caractérisé par le fait que la coupelle comprend des moyens de fixation sur un organe de manoeuvre de la butée d'embrayage.

3. Dispositif de butée d'embrayage comprenant un sous-ensemble selon la revendication 1 ou 2, monté sur un organe de manoeuvre (1), caractérisé par le fait que la coupelle est solidaire de l'organe de manoeuvre, la partie radiale de la coupelle étant disposée entre l'organe de manoeuvre et la bague non tournante

4. Dispositif selon la revendication 3, caractérisé par le fait que la partie cylindrique (10b) de la coupelle est montée sur une extrémité cylindrique (4a) de l'organe de manoeuvre.

5. Dispositif selon la revendication 4, caractérisé par le fait que l'extrémité cylindrique de l'organe de manoeuvre comprend des moyens de retenue de la coupelle.

6. Dispositif selon la revendication 5, caractérisé par le fait que l'extrémité cylindrique (4a) de l'organe de manoeuvre est découpée en languettes (8) radialement élastiques et faisant saillie vers l'extérieur en coopérant avec le rebord (10c) de la coupelle.

7. Dispositif selon la revendication 5, caractérisé par le fait que l'extrémité cylindrique (4a) de l'organe de manoeuvre comprend des protubérances radiales coopérant avec des creux (21) ou des fenêtres (22) correspondants de la partie cylindrique de la coupelle.

8. Dispositif selon l'une quelconque des revendications 3 à 5, caractérisé par le fait que la coupelle comprend une partie cylindrique supplémentaire (10d) s'étendant à partir de la partie radiale à l'opposé du roulement et munie de moyens de retenue de la coupelle sur l'organe de manoeuvre.

9. Dispositif selon la revendication 8, caractérisé par le fait que la partie cylindrique supplémentaire (10d) de la coupelle comprend des languettes élastiques (20) coopérant avec un épaulement (4c) de l'organe de manoeuvre.

10. Dispositif selon la revendication 8, caractérisé par le fait que la partie cylindrique supplémentaire (10d) de la coupelle comprend des languettes (24) rabattues dans des encoches (25) de l'organe de manoeuvre.

11. Dispositif selon l'une quelconque des revendications 3 à 10, caractérisé par le fait qu'il comprend un organe d'étanchéité emmanché sur une portée cylindrique de la bague tournante.

12. Procédé d'assemblage d'un dispositif de butée d'embrayage, dans lequel :
- on met en contact une bague non tournante (12) du roulement comprenant une portion radiale, et une coupelle (10) en tôle métallique comprenant une partie radiale (10a), une partie cylindrique (10b) dont une extrémité se raccorde à l'extrémité de petit diamètre de la partie radiale et dont l'autre extrémité se prolonge par un rebord radial (10c),
- on solidarise axialement la bague non tournante et la coupelle au moyen d'une rondelle (19) axialement élastique qui, d'un côté, est en contact avec le rebord radial de la coupelle et, de l'autre côté, met la portion radiale (12a) de la bague non tournante (12) en appui contre la partie radiale de la coupelle,
- on emmanche la coupelle sur une partie cylindrique (4a) d'un organe de manoeuvre (1).

13. Procédé selon la revendication 12, caractérisé par le fait que la bague non tournante (12) supporte une rangée d'éléments roulants (13) maintenue par une cage (14) et qu'on assemble une bague tournante (11) et la bague non tournante pour former un roulement (3) de butée, un organe d'étanchéité (15) étant emmanché sur une portée cylindrique de la bague tournante de façon à solidariser les bagues tournante et non tournante avant l'étape d'emmanchement de la coupelle sur l'organe de manoeuvre.

## Patentansprüche

1. Unterbaugruppe für Kupplungsausrücklager, zu der ein Ausrücklager (3) gehört, das einen umlaufenden Ring (11), einen mit einem radialen Abschnitt (12a) versehenen, stillstehenden Ring (12) und dazwischen eingefügte Wälzelemente (13) umfasst, wobei zu der Unterbaugruppe unter anderem gehören: eine Hülse (10) aus Metallblech mit einem radialen Abschnitt (10a), der auf dem radialen Abschnitt (12a) des stillstehenden Rings anliegt, und mit einem zylindrischen Abschnitt (10b), der sich an einem seiner Enden an den radialen Abschnitt anschließt und an dem anderen Ende in einen radialen Rand (10c) übergeht, wobei die Hülse ein mit dem Betätigungselement geeignet zusammenwirkendes, gesondertes Element darstellt, und einen in axialer Richtung elastischen Ring (19), der auf seinem inneren Umfang mit elastischer Zungen (19c) versehen ist, die zum Zweck der Montage des Rings auf der Hülse nachgeben können, wobei der Ring in der Lage ist, den radialen Abschnitt des stillstehenden Rings in axialer Richtung gegen den radialen Abschnitt der Hülse zu pressen, und der elastische Ring in axialer Richtung durch die radiale Schulter der Hülse festgehalten wird.

2. Unterbaugruppe nach Anspruch 1, dadurch gekennzeichnet, dass die Hülse Mittel für die Befestigung an einem Betätigungselement des Kupplungsausrücklagers umfasst.

3. Kupplungsausrücklagervorrichtung, die eine Unterbaugruppe nach Anspruch 1 oder 2 enthält, die an einem Betätigungselement (1) angebracht ist, dadurch gekennzeichnet, dass die Hülse fest mit dem Betätigungselement verbunden ist, wobei der radiale Abschnitt der Hülse zwischen dem Betätigungselement und dem stillstehenden Ring angeordnet ist.

4. Vorrichtung nach Anspruch 3, dadurch gekennzeichnet, dass der zylindrische Abschnitt (10b) der Hülse auf einem zylindrischen Fortsatz (4a) des Betätigungselementes befestigt ist.

5. Vorrichtung nach Anspruch 4, dadurch gekennzeichnet, dass der zylindrische Fortsatz des Betätigungselementes Mittel für die Befestigung der Hülse umfasst.

6. Vorrichtung nach Anspruch 5, dadurch gekennzeichnet, dass der zylindrische Fortsatz (4a) des Betätigungselementes in Zungen (8) aufgeschnitten ist, die in radialer Richtung elastisch sind und im Zusammenwirken mit dem Rand (10c) der Hülse radial nach außen vorspringen.

7. Vorrichtung nach Anspruch 5, dadurch gekennzeichnet, dass der zylindrische Fortsatz (4a) des Betätigungselementes radiale Vorsprünge aufweist, die mit entsprechenden Vertiefungen (21) oder Fenstern (22) des zylindrischen Abschnitts der Hülse zusammenwirken.

8. Vorrichtung nach einem der Ansprüche 3 bis 5, dadurch gekennzeichnet, dass die Hülse einen zusätzlichen zylindrischen Abschnitt (10d) aufweist, der sich von dem radialen Abschnitt aus von dem Lager weg erstreckt, und mit Mitteln für die Befestigung der Hülse auf dem Betätigungselement versehen ist.

9. Vorrichtung nach Anspruch 8, dadurch gekennzeichnet, dass der zylindrische Abschnitt (10d) der Hülse elastische Zungen (20) aufweist, die mit einer Schulter (4c) des Betätigungselementes zusammenwirken.

10. Vorrichtung nach Anspruch 8, dadurch gekennzeichnet, dass der zylindrische Abschnitt (10d) der Hülse elastische Zungen (24) aufweist, die in Kerben (25) des Betätigungselementes umgebogen sind.

11. Vorrichtung nach einem der Ansprüche 3 bis 10, dadurch gekennzeichnet, dass die Vorrichtung ein Dichtungselement aufweist, das auf einem zylindrischen Abschnitt des umlaufenden Rings aufgesteckt ist.

12. Verfahren zum Zusammenbau einer Kupplungsausrücklagervorrichtung, zu dem die folgenden Schritte gehören:
- ein stillstehender Ring (12) des Lagers, der einen radialen Abschnitt aufweist, und eine Hülse (10) aus Metallblech, die einen radialen Abschnitt (10a) und einen zylindrischen Abschnitt (10b) aufweist, dessen eines Ende auf das Ende des radialen Abschnittes mit kleinem Durchmesser passt, und dessen anderes Ende durch einen radialen Rand (10c) verlängert ist, werden miteinander in Berührung gebracht,
- der stillstehende Ring und die Hülse werden mittels eines in axialer Richtung elastischen Rings (19) axial aneinander gesichert, der auf einer Seite mit dem radialen Rand der Hülse und auf der anderen Seite an dem radialen Abschnitt (12a) des stillstehenden Rings (12) in Berührung steht, indem er gegen den radialen Abschnitt der Hülse gedrückt wird,
- die Hülse wird auf einen zylindrischen Abschnitt (4a) eines Betätigungselementes (1) aufgesteckt.

13. Verfahren nach Anspruch 12, dadurch gekennzeichnet, dass der stillstehende Ring (12) eine durch einen Käfig (14) in Position gehaltene Reihe von Wälzkörpern (13) trägt und dass ein umlaufender Ring (11) mit dem stillstehenden Ring zusammengesetzt wird, um ein Drucklager (3) zu bilden, wobei ein Dichtungselement (15) in einen zylindrischen Abschnitt des umlaufenden Rings eingesteckt wird, um den umlaufenden und den stillstehenden Ring vor dem Schritt des Aufsteckens der Hülse auf dem Betätigungselement aneinander zu sichern.

## Claims

1. Clutch-release bearing subassembly comprising a rolling-contact thrust bearing (3) having a rotating race (11), a non-rotating race (12) equipped with a radial portion (12a) and interposed rolling bodies (13), the subassembly further comprising a dished part (10) made of metal sheet comprising a radial part (10a) mounted on the radial portion (12a) of the non-rotating race and a cylindrical part (10b) connecting with the radial part at one of its ends and extending at the other end to form a radial rim (10c), the dished part being separate from an operating member with which it is able to interact, and an axially elastic washer (19) equipped on its internal periphery with elastic tabs (19c) which can bend for mounting the said washer on the dished part, the said washer being capable of bringing the radial portion of the non-rotating race to bear axially against the radial part of the dished part and the said elastic washer being axially retained by the radial rim of the dished part.

2. Subassembly according to Claim 1, characterized in that the dished part comprises means of attachment to a member for operating the clutch-release bearing.

3. Clutch-release bearing device comprising a subassembly according to Claim 1 or 2, mounted on an operating member (1), characterized in that the dished part is secured to the operating member, the radial part of the dished part being arranged between the operating member and the non-rotating race.

4. Device according to Claim 3, characterized in that the cylindrical part (10b) of the dished part is mounted on a cylindrical end (4a) of the operating member.

5. Device according to Claim 4, characterized in that the cylindrical end of the operating member comprises means of retaining the dished part.

6. Device according to Claim 5, characterized in that the cylindrical end (4a) of the operating member is cut into radially elastic tabs (8) projecting outwards whilst interacting with the rim (10c) of the dished part.

7. Device according to Claim 5, characterized in that the cylindrical end (4a) of the operating member comprises radial projections interacting with corresponding hollows (21) or corresponding apertures (22) of the cylindrical part of the dished part.

8. Device according to any one of Claims 3 to 5, characterized in that the dished part comprises an additional cylindrical part (10d) extending from the radial part away from the rolling-contact bearing and equipped with means for retaining the dished part on the operating member.

9. Device according to Claim 8, characterized in that the additional cylindrical part (10d) of the dished part comprises elastic tabs (20) interacting with a shoulder (4c) of the operating member.

10. Device according to Claim 8, characterized in that the additional cylindrical part (10d) of the dished part comprises tabs (24) folded down into notches (25) of the operating member.

11. Device according to any one of Claims 3 to 10, characterized in that it comprises a sealing member pushed over a cylindrical bearing surface of the rotating race.

12. Method of assembling a clutch-release bearing device, in which method:
- a non-rotating race (12) of the rolling-contact bearing comprising a radial portion and a dished part (10) made of metal sheet comprising a radial part (10a), a cylindrical part (10b) one end of which connects with the small-diameter end of the radial part and the other end of which is extended by a radial rim (10c) are brought into contact,
- the non-rotating race and the dished part are secured axially by means of an axially elastic washer (19) which on one side is in contact with the radial rim of the dished part and, on the other side, brings the radial portion (12a) of the non-rotating race (12) to bear against the radial part of the dished part,
- the dished part is pushed onto a cylindrical part (4a) of an operating member (1).

13. Method according to Claim 12, characterized in that the non-rotating race (12) supports a row of rolling bodies (13) held by a cage (14) and in that a rotating race (11) and the non-rotating race are assembled to form a rolling-contact thrust bearing (3), a sealing member (15) being pushed over a cylindrical bearing surface of the rotating race so as to secure the rotating and non-rotating races before the step of pushing the dished part over the operating member.
